# EUROPEAN PATENT APPLICATION

(11) **EP 4 018 840 A1**
(43) Date of publication of application: **29.06.2022**
(21) Application number: 21179972.1
(22) Date of filing: 17.06.2021
(51) Int. Cl.: A23L 3/34, A23L 3/3472, A23L 29/00, A23L 29/206, A23L 29/30, A23L 3/3562

(54) **FOOD PRESERVATIVE COMPOSITION AND PREPARATION METHOD THEREOF**

(30) Priority: 24.12.2020 IT 202000032390
(71) Applicant: Ingrit S.r.l., 35027 Noventa Padovana PD (IT)
(72) Inventor: Agostini, Riccardo, 35027 Noventa Padovana PD (IT)
(74) Representative: Perani & Partners S.p.A.

(57) **Abstract**

The object of the invention relates to a composition comprising a first and a second association of natural extracts, which is used as a preservative in food or food preparations. A further object of the invention is a method of preparing said composition.

## Description

### FIELD OF THE INVENTION

The present invention relates to preservative compositions and to the method of preparing them.

### BACKGROUND OF THE INVENTION

Food preservation is one of the essential processes in food processing industry, which is primarily intended to preserve edibility and nutritional value of food over time, preventing accidental alterations and affording use thereof over an extended time, from a few days to a few years.

Alteration (or degradation) of food may be caused by biological or chemical/physical factors. The former primarily include the possible presence of *micro*rganisms such as bacteria, viruses, spores, molds, metabolic enzymes in the food or in humans, or *macro*rganisms such as parasites, insects, mice. Chemical/physical factors mainly include changes in temperature, humidity and/or exposure to air, which cause oxidation of the compounds of food and can accelerate the alteration of its nutritional and/or organoleptic properties, such as taste, color and flavor.

In addition to nutritional value, preservation processes also focus on appearance and flavor, especially in markets in which such parameters provide added value to food.

Food having a greater amount of water are more at risk, as water is the main substrate for growth and proliferation of pathogenic, and hence undesired, microorganisms. The possible risks of poor food preservation are rancidity, decomposition, molds, dehydration, parasitic contamination,

In addition to conventional preservation methods, such as cooking, cooling, pickling, preservation in oil, newer processes are provided, sealing products in special vacuum containers immediately after treatment, to prevent contamination,

Additional techniques, such as drying, allow normal packing without taking special measures and ensure preservation of food for long periods.

Freezing consists in lowering food temperature to a constant value, which may range from -18°C to -25°C as needed. This treatment will kill *almost* all, but not all, bacteria. Nevertheless, the freezing process suffers from a drawback: the formation of ice may break food cell membranes; therefore, during thawing, partial loss of nutrients may occur. For this reason, freezing is often replaced with quick freezing with temperature being lowered very quickly, thereby creating smaller ice crystals that are not harmful to the cells.

Further preservation methods are smoking, pasteurization, UHT (*Ultra High temperatures*), controlled atmosphere, use of microwaves or ultraviolet rays, high pressure, addition of preservative additives.

### Problem of the prior art

All these preservation methods require, for the food industry in particular, the use of sophisticated plants and a wide use of process energy, which entails inevitable costs.

In addition, on the one hand sophisticated physical treatments and high temperatures reduce and denature food nutrients; and on the other hand, food current additives derived from chemical or synthetic processes are unhealthy and can add undesired aftertaste to food. Moreover, food additives are less and less accepted by average consumers because of their potential harmful consequences.

In particular, mixtures of lactic acid salts (or lactates) and acetic acid salts (or acetates) may also be used to control the bacterial count of fresh food, but the food additive must be undesirably indicated in the label in this case. In addition, they affect the taste of food and provide bacterial count control *only* for quite short periods. Due to fast oxidation, the color of food also tends to rapidly change, and lose its fresh appearance.

### SUMMARY OF INVENTION

A first object of the present invention is a food preservative composition comprising:
- a first association of extracts containing
   ∘ grape seed extract,
   ∘ green tea extract, and
   ∘ an extract selected from the group consisting of rosemary extract, sea-buckthorn extract, dog rose extract and combinations thereof,
   the first association being in quantities comprised between 4.5% and 10% by weight based on the total weight of the composition,
- a second association of extracts comprising one or more water-soluble carbohydrates derived from cereals and/or tubers, the second association being in quantities comprised between 90% and 95,5% by weight based on the total weight of the composition.

A second object of the invention is a method of preparing the preservative composition comprising the steps of:
a) providing a precursor of the first association of extracts comprising
   a primary grape seed extract
   a primary green tea extract,
   primary rosemary, sea-buckthorn, dog rose extracts or combinations thereof, and
      a precursor of the second association of extracts, comprising
   a primary extract of cereals and/or tubers containing one or more water-soluble carbohydrates;
b) separately treating the primary extracts, the step of treating comprising:
   b1) a heating sub-step at temperatures comprised between 15°C and 40°C and for a time period comprised between 19 and 37 minutes, followed by
   b2) a cooling sub-step at temperatures comprised between 0.1°C and 3°C and for a time period comprised between 16 and 25 minutes
   wherein the heating sub-step b1) and the cooling sub-step b2) are together cyclically repeated for a number of times ≥ 10 and ≤ 20
   to obtain the first association of extracts and the second association of extracts of the preservative composition;
c) mixing the first and second associations of extracts at a temperature comprised between 15°C and 25°C to obtain the preservative composition.

A third object of the invention is the use of the composition as a preservative for fresh or cooked food or food preparations.

### Advantages of the invention

As compared with the prior art, the invention provides the following advantages:
- the food composition comprises associations of natural extracts free of chemical/synthetic additives;
- with the preparation method of the claimed composition, the use of stressful physical treatments which affect food quality is avoided. In addition, on the one hand, antioxidant and antibacterial properties as well as reduction of the general growth of other microorganisms (yeasts, molds), are enhanced, which properties are due to the action of the chemical compounds in the extracts; on the other hand, the binding effect is increased due to the carbohydrates specifically comprised in the second association of extracts;
- the way of using the food composition for use as a preservative is simple and effective, with incorporation and homogeneous dispersion thereof in the food or food preparation in small amounts as compared with the mass of the food or of the food preparation itself;

- the composition is flexibly used as a preservative for a variety of foods or food preparations, both fresh and even already cooked;
- the oxidation of oils and/or fats can be reduced and additional secondary products of oxidation (aldehydes, ketones) can be also reduced; therefore, the natural color of the food and the organoleptic properties of freshness beyond normal standards can be maintained for a long time;
- any actual and accidental pathogenic bacterial count before food consumption may be controlled/inhibited;
- water in the food or food preparation has a low activity;
- a longer shelf-life is provided for the food or food preparation.

### DESCRIPTION OF FIGURES

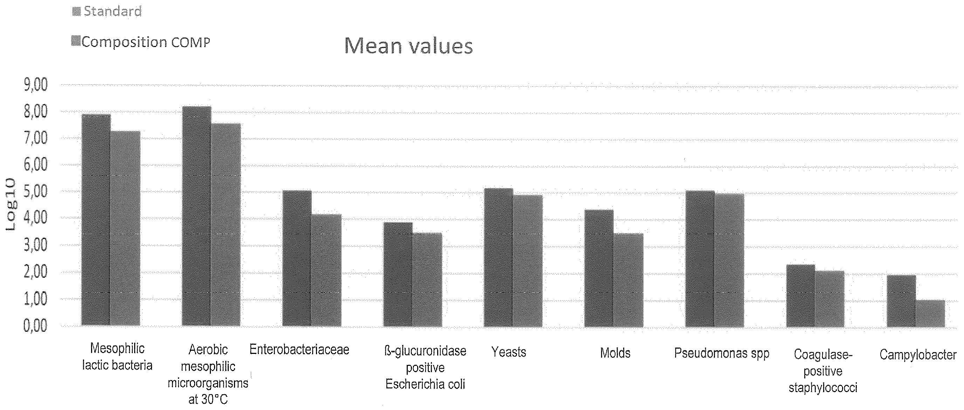

Figure 1 - Summary diagram of the trend "STD" *vs* composition "COMP" in experimental values obtained from the methods 1-22.

### DETAILED DESCRIPTION OF THE INVENTION

### Preservative composition

The preservative composition of the present invention contains a first association of extracts and a second association of extracts.

Extracts generally refer to products of natural origin derived from medicinal plants and herbs of different types. Many parts of the plant may be used to obtain these products: leaves, flowers, fruits (pulp and/or skin), seeds, roots, rhizomes, bark, etc. These may be preparations in liquid form (liquid extracts), in solid form (dry extracts) or of intermediate consistency (soft extracts), obtained using suitable extraction processes; the latter including the use of suitable solvents and maceration or percolation, or other suitable processes.

The first association of extracts of the composition preferably contains:
- grape seed extract in quantities comprised between 2.5% and 5% by weight,
- green tea extract in quantities comprised between 1.5% and 3% by weight, and
- an extract selected from the group consisting of rosemary extract, sea-buckthorn extract, dog rose extract and combinations thereof, whose total amount is comprised between 0.5% and 2% by weight based on the total weight of the preservative composition.

The grape seed extract is in quantities comprised preferably between 2.5% and 4% by weight.

The green tea extract is in quantities comprised preferably between 1.5% and 2% by weight.

The extract selected from the group consisting of rosemary extract, sea-buckthorn extract, dog rose extract and combinations thereof, is in quantities comprised between 0.7% and 1.8% by weight.

The extract selected from the group consisting of rosemary extract, sea-buckthorn extract, dog rose extract and combinations thereof is the rosemary extract.

The grape seed extract is obtained by extraction using ethanol solvents (70% v/v) and water (30% v/v). The grape seed extract contains a high amount of vitamin E, polyphenols and natural flavonoids which have excellent antioxidant properties useful in delaying bacterial growth and food decomposition processes. In addition, the grape seed extract also contains linoleic acid, a precursor of Omega 6 acids. Linoleic acid is useful for cells and is derived from natural resources, such as grape seeds and olive oil. In addition, other ingredients included in the grape seed extract are oligomeric protoanthocyanidins (or OPCs). These are chemically bioflavonoids and are a powerful antioxidant that can counteract free radicals and oncogenic mechanisms.

The green tea extract is obtained using only water (100% v/v). It has purifying and detoxifying properties. It is useful for food preservation as it contains various components with a polyphenolic chemical structure having antioxidant properties, as well as catechins, epicatechins and epigallocatechins. The latter are deemed to be able to enhance the antioxidant action of Vitamin E and to delay oxidation of food fats, thereby preserving their stability over time, extending their shelf-life and preservation potential. Catechins also have antibacterial and immunostimulatory properties.

The rosemary extract comprises active phytochemical compounds, including phenols and diterpenes, such as rosemary acid, carnosic acid and carnosol, which in turn induce an important antioxidant action. Also, the rosemary extract has good antibacterial properties not only against *Helycobacter pylori*, but also against *Staphiloccus aureus, Pseudomonas aeruginosa, Salmonella, Listeria* and a wide range of Gram positive and Gram negative bacteria that are harmful to health and can transfer to humans through food with possibly fatal consequences. Preferably, said rosemary extract may consist of a mixture of rosemary extract with no solvents and maltodextrin.

In view of the inherent properties of each extract, the Applicant has proposed a composition containing them together: the choice of combining three different extracts has the purpose to obtain a preservative composition having a broad spectrum activity, each of its components compensating for or supporting the antibacterial and antioxidant properties of the other extracts.

The second association of extracts of the preservative composition comprises one or more water-soluble carbohydrates which are preferably obtained by chemical hydrolysis processes, preferably by the decomposition of starches derived from cereals and/or tubers.

Preferably, the cereals are selected from the group composed of : corn, oats, wheat and rice. Preferably the cereal is corn. Preferably the tubers are selected from potato and tapioca.

It should be noted that the second association of extracts may contain extracts obtained separately, each comprising one or more water-soluble carbohydrates derived from cereals or tubers, but may be also constituted by an extract obtained by a single process, said extract comprising one or more water-soluble carbohydrates derived from cereals or tubers. Preferably, the second association of extracts is a single extract comprising water-soluble carbohydrates derived from cereals or tubers. More preferably, the second association is a corn extract, which preferably comprises maltodextrin and dextrose.

Water-soluble carbohydrates are preferably complex carbohydrates. Preferably the water-soluble carbohydrates have a low glycemic index. Preferably, water-soluble carbohydrates do not contain gluten.

The water-soluble carbohydrates are preferably selected from the group consisting of maltodextrin, dextrose and combinations thereof.

Preferably, the second combination of extracts is composed of maltodextrin and dextrose.

Preferably, the second association of extracts comprises maltodextrin in quantities comprised between 50% and 80% by weight, preferably in quantities comprised between 55% and 67% by weight, preferably is in quantities of 63% by weight based on the total weight of the preservative composition.

Preferably the second association of extracts comprises dextrose in quantities comprised between 10% and 45.5% by weight, preferably in quantities comprised between 28% and 32% by weight, preferably is in quantities of 30% by weight based on the total weight of the preservative composition.

Preferably the extracts of the first and second associations are in the form of dry extracts.

Dry extract refers to a solid preparation obtained by means of an extraction process using solvents that extract the active ingredients contained in the extract, and a subsequent solvent evaporation step. Generally, the dry extract is characterized by a dry residue of not less than 90% by mass and has a moisture content generally that is less than or equal to 5% by mass.

Preferably, the first and second association of extracts are in powder form; the powder is fine, light, volatile.

It should be noted that the extracts of the first association are characterized by different colors: yellow of the rosemary extract, light brown of the green tea extract, red-orange tending to brown, of the grape seed extract.

The extracts of the second association are preferably in the form of powders; such powders are compact and white.

According to a preferred embodiment, the grape seed extract has a polyphenol content preferably ranging from 93% to 97% by weight, based on the total weight of the extract.

According to a preferred embodiment, the green tea extract has a catechin content preferably ranging from 18% to 24% by weight, based on the total weight of the extract.

According to a preferred embodiment, the first association comprises an extract selected from rosemary, sea-buckthorn, dog rose extracts or combinations thereof, wherein
- the rosemary extract has a carnosic acid and carnisol content preferably ranging from 3.8% to 4.5% by weight, based on the total weight of the extract;
- the sea-buckthorn extract has an Omega 3 and Omega 6 fat content preferably ranging from 5.5% to 6.5% by weight, based on the total weight of the extract;
- the dog rose extract has an ascorbic acid (vitamin C) content preferably ranging from 10% to 14% by weight, based on the total weight of the extract.

According to a preferred embodiment, the cereal and/or tuber extract contains a concentration of one or more water-soluble carbohydrates which ranges from 93% to 97% by weight, based on the total weight of the extract.

Preferably, the cereal and/or tuber extract contains maltodextrin and dextrose, with the total content of maltodextrin and dextrose ranging from 90% to 99.8% by weight, based on the total weight of the extract.

### Method of preparing the preservative composition

The second object of the present invention is the method of preparing the preservative composition.

As mentioned above, the method comprises a first step of a) providing precursors of the first and second associations of extracts. "Precursor" refers by association to the whole set of starting extracts (defined as primary to differentiate them from those obtained downstream from the treatment) that will undergo a thermal treatment.

According to the method of the present invention, the provision step a) is followed by the precursor treatment step b), said step comprising:
b1) the heating sub-step and
b2) the cooling sub-step,
wherein the set of the heating sub-step b1) and the cooling sub-step b2) is cyclically repeated for a number of times preferably ranging from ≥ 10 to ≤ 20, preferably from ≥ 10 to ≤ 15.

It should be noted that the content of each primary extract remains unchanged during the entire preparation method and, in particular, during the treatment step b). In other words, the content of each primary extract of the precursors of the first and second association of extracts, *before* the treatment step b), is equal to the content of the corresponding extract of the first and second association of extracts, *after* the treatment step b).

Without being bound by theory, the Applicant believes that the treatment step b) has an effect on the three-dimensional structure of the molecules constituting each primary extract; such modified dimensional structure deriving from heat treatment, according to the Applicant, will improve the antibacterial and antioxidant activity of each extract, and provide a synergy between the extracts contained in the preservative composition. The thermally treated extracts, once mixed, advantageously achieve a better synergistic effect than the one that would be obtained without such treatment step b).

### Treatment of the precursor of the first association of extracts

Preferably, the step of b) treating the precursor of the first association of extracts applied to the primary grape seed extract, comprises: b1) the heating sub-step at a maximum temperature of 36°C, preferably ranging from 26°C to 36°C, for 19 minutes, and b2) the cooling sub-step at a minimum temperature of 1.8°C, preferably ranging from 1.8°C to 2.5°C, for 16 minutes, wherein preferably the set of the heating sub-steps b1) and cooling sub-steps b2) has to be cyclically repeated for a number of times ≥ 10 and ≤ 20, preferably ≥ 10 and ≤ 15.

Preferably, the step of b) treating the precursor of the first association of extracts applied to the primary green tea extract, comprises: b1) the heating sub-step at a maximum temperature of 40°C, preferably ranging from 27°C to 40°C, for 25 minutes, and b2) the cooling sub-step at a minimum temperature of 0.5°C, preferably ranging from 0.5°C to 1.5°C, for 17 minutes, wherein preferably the set of the heating sub-steps b1) and cooling sub-steps b2) has to be cyclically repeated for a number of times ≥ 10 and ≤ 20, preferably ≥ 10 and ≤ 15.

Preferably, the step of b) treating the precursor of the first combination of extracts applied to the primary rosemary extract, comprises: b1) the heating sub-step at a maximum temperature of 39°C, preferably ranging from 27°C to 39°C, for 33 minutes, and b2) the cooling sub-step at a minimum temperature of 0.6°C, preferably ranging from 0.6°C to 1.8°C, for 22 minutes, wherein preferably the set of the heating sub-steps b1) and cooling sub-steps b2) has to be cyclically repeated for a number of times ≥ 15 and ≤ 20, preferably ≥ 15 and ≤ 17.

### Treatment of the precursor of the second association of extracts

Preferably, the step of b) treating the precursor of the second association of extracts applied to the primary extract containing one or more water-soluble carbohydrates derived from cereals and/or tubers comprises: b1) the heating sub-step at a maximum temperature of 27°C, preferably ranging from 19°C to 27°C, for 37 minutes, and b2) the cooling sub-step at a minimum temperature of 0.2°C, preferably ranging from 0.2°C to 1.5°C, for 25 minutes wherein preferably the set of the heating sub-steps b1) and cooling sub-steps b2) has to be cyclically repeated for a number of times ≥ 10 and ≤ 20, preferably ≥ 10 and ≤ 15.

Preferably for the step of b) treating of the precursor of the second association of extracts applied to the primary extract containing one or more water-soluble carbohydrates derived from cereals and/or tubers, the water-soluble carbohydrates are selected from the group consisting of: maltodextrin, dextrose and combinations thereof, preferably maltodextrin and dextrose.

At the end of the treatment step b) the first association of extracts and the second association of extracts comprised in the preservative composition are obtained.

The primary extracts comprised in the precursors of the first and second association, as well as the extracts comprised in the first and second association, are preferably free of allergens and genetically modified organisms (GMO) as well as any ionizing radiation, pesticides and parasiticides.

Preferably the steps of the preparation method a)-c) exclude any kind of mechanical or thermal stress.

Advantageously, the temperatures and times of the preparation method of the present invention do not damage the active substances naturally contained in the individual extracts comprised in the first and second association; conversely, they can stabilize their particular molecular characteristics by preparing them for synergy and mutual interaction.

According to the present invention, the second association of extracts facilitates dispersion and compaction of the first association of extracts, preferably the first association of dry or powder extracts. By this arrangement, the food preservative composition will be obtained from the mixing step c) of the preparation method in a stable and compact form.

### Use of the preservative composition

A further object of the invention is the use of the composition as a preservative.

Preferably, the composition is dispersed in food or food preparations in amounts ranging from 0.3% to 0.5% by weight based on the total weight of the food or food preparation.

The preservative composition is preferably dispersed with other powders, such as salt, flavors, etc.; then mixing and/or kneading are performed to homogeneously disperse the composition within the mass of the food or food preparation.

Preferably, the presence of the second association of extracts in the preservative composition, preferably the presence of maltodextrin and dextrose, facilitates handling thereof while affording easier and more homogeneous dispersion or incorporation thereof into the mass of the food or food preparation.

Advantageously, the composition of the invention affords optimum preservation of food or food preparations, i.e. without altering their original taste and keeping the color mainly unchanged over time. The natural appearance and the living and stable color are also indicative of the preservation of the original freshness of the food or food preparation. Namely, the color may be assessed by the CIELab colorimetric assay (see Section 1.2 of the Examples, which shows the results obtained from a comparative study that uses the sampling and analysis method as described in Section 3). The CIELab measurement method was developed by the International Commission on Illumination (Commission Internationale de l'Éclairage, CIE) in 1976. It indicates the color through three parameters or coordinates: *L* ("el") stands for lightness, and *a* and *b* refer to chromaticity coordinates, respectively the variation between red and green (*a*) and the variation between yellow and blue (*b*)*.* A change in the color of the food/food preparation indicates an alteration in its oxidation state. Therefore, the more the CIELab value measured over time is constant, the more significant is the stability of the color and, therefore, the chemical-physical stability of the food/food preparation.

Food refers to any substance or mixture of substances in any state of the matter and with the structure not processed, partially processed or processed and intended to be ingested; the food compensates for energy consumption and provides the materials required for reintegration, possible growth and performance of the essential functions for the life of the individual. Examples of food which do not intend to be exclusive or limit the present invention are meat, milk, eggs, fishery products, vegetables, cheese.

Food preparation refers to a food product obtained by processing or treating, possibly even under hot or cold conditions, one or more foods and intended to be ingested.

Preferably, food or food preparations are selected from the group composed of: meat, meat preparations, sauces, juices, fillings of culinary preparations, stuffed pasta and combinations thereof.

Sauce refers to a liquid or semi-liquid food condiment, based on oil or butter and various ingredients, for both cooked and raw preparations.

Juice refers to a liquid condiment obtained, by pressing food such as oranges, tomatoes, etc.

Filling of culinary preparations refers to a food preparation in which fresh or cooked food material, preferably of sauce type, is filled into a fresh or cooked food.

Preferably, the use of the preservative composition is intended for bacteriostasis of microorganisms selected from the group consisting of: mesophilic lactic bacteria, aerobic mesophilic microorganisms, psychotropic microorganisms, yeasts, molds, coagulase-positive staphylococci, *Enterobacteriaceae, Escherichia coli, Pseudomonas spp, Staphylococcus aureus, Campylobacter spp, Listeria monocytogenes,* and *Salmonella spp* and combinations thereof.

Mesophyle refers to a microorganism that can survive at an optimum temperature of about 30°C up to a maximum of 45°C.

Aerobic mesophilic bacteria refer to a group of bacteria comprising various species of the genus *Bacillus* (source: *Aerobic Mesophilic Sporforming bacteria, Nathan Ryno Smith, Ruth Evelyn Gordon, Francis Eugene Clark, 1946).*

Lactic bacteria refer to a heterogeneous group of bacteria sharing the characteristic of producing lactic acid as the main derivative of anaerobic fermentation of sugars. They are ubiquitous, nonmotile and non-spore-forming bacteria, obligate or facultative anaerobes. An example are the genus *Lactobacillus* and *Streptococcus.*

Ppsychotrophic (or cryophilic) microorganisms refer to microorganisms capable of growing and multiplying at temperatures ranging from 0°C to 20°C. Non-limiting examples are: *Arthrobacter, Psychrobacter, Halomonas, Pseudomonas, Hyphomonas* and *Sphingomonas.*

Preferably the food or food preparation that is added with the preservative composition has a *shelf-life* comprised between 8 and 12 days, more preferably 12 days.

The *shelf-life* (also known as "validity period") of a food product refers to the value that is equal to the time period from production to sale of that product during which its quality and safety conditions are preserved. The *shelf-life* depends on many factors, such as production process, type of packaging, storage conditions, ingredients.

### EXAMPLES

Examples are given below for purely illustrative and non-limiting purposes.

### 1.1 Qualitative/quantitative example of the preservative composition

| Component | Percentage % by weight of the total weight of the preservative composition (% w/w) |
|---|---|
| Maltodextrin | 65 |
| Dextrose | 30 |
| Grape seed extract | 3 |
| Green tea extract | 1.5 |
| Rosemary extract | 0.5 |

This preservative composition was obtained with the method of the invention, in which the treatment step b) (sub-steps b1) and b2)) was carried out as follows:

| **Extract** | **Treatment step b)** | **Time** |
|---|---|---|
| Grape seed extract: | Heating at 36°C max. | for 19 minutes |
| | Cooling at 1.8°C min. | for 16 minutes |
| | Process replication: at least 10 times | |
| Green tea extract: | Heating at 40°C max. | for 25 minutes |
| | Cooling at 0.5°C min. | for 17 minutes |
| | Process replication: at least 10 times | |
| Rosemary extract: | Heating at 39°C max. | for 33 minutes |
| | Cooling at 0.6°C min. | for 22 minutes |
| | Process replication: at least 15 times | |
| Maltodextrin/dextrose: | Heating at 27°C max. | for 37 minutes |
| | Cooling at 0.2°C min. | for 25 minutes |
| | Process replication: at least 10 times | |

### 1.2 Comparative study example

The purpose of the this test was to detect the behavioral dynamics of certain microorganisms of interest during the marketing period of the chicken burger product "HAMBURGER DI POLLO 100g" (in Figures 1-23 referred to as "STD" or standard) produced with the addition of the preservative composition (in Figures 1-23 referred to as "COMP" or composition) by comparison with the behavioral dynamics of the same micro-organisms, in the same product, produced with known technologies.

### REFERENCE SELECTED FOR THE COMPARATIVE STUDY

The reference selected for this comparative test was a 100 g chicken burger of the commercial product "HAMBURGER DIPOLLO 4x100g" produced and packaged by Avicola Alimentare Monteverde in a film-packaged tray (no ATM, no SV, no SKIN) added with the preservative composition of the invention.

The reference was compared with a standard, consisting of one 100 g chicken burger of the same type as mentioned above, prepared with traditional methods, i.e. comprising lactic acid- and/or acetic acid-based preservative ingredients. The standard has a *shelf-life* of 8 (eight) days from the date of packaging, with a storage temperature of 0÷4°C.

### OPERATIONAL PROTOCOL

Considering that the reference selected for this comparative study has a *shelf-life* of 8 days from the date of packaging, checks carried out at 7 product preservation times (T), i.e. respectively at 0, 2, 4, 6, 8, 10 and 12 days, were deemed to be sufficiently adequate for assessment of any variations from the standard formulation, i.e. without the addition of the preservative composition.

This comparative study was carried out in a single aliquot, both for standard recipe and for the recipe with the addition of the preservative composition. Given that the products produced within the scope of the present study were not intended for consumption, in order to facilitate appreciation of any differences between the standard STD recipe and the recipe comprising the preservative composition COMP (limitation of specific bacterial proliferation), the manufacturer (Avicola Alimentare Monteverde) expressly requested to produce experimental samples, only at the end of the day and only under uncontrolled operating conditions, without applying the pre-operational procedures that are typically used at the factory.

### SAMPLING AND ANALYSIS

Samples were taking in accordance with internal procedures.

Laboratory tests were carried out with the following methods 1-22:
1. Activity of water (AW) (ISO 18787:2017);
2. pH (NMKL No. 179, 2005);
3. Colorimetry (CIELab) (MPI-176-R00.17);
4. Mesophilic lactic bacteria (ISO 15214:1998);
5. Aerobic mesophilic microorganisms at 30°C (ISO 4833-1:2013);
6. Psychotrophic microorganisms (ISO 17410:2019);
7. *Enterobacteriaceae* (ISO 21528-2:2017);
8. β-glucuronidase positive Escherichia coli (ISO 16649-2:2001);
9. Yeasts (ISO 21527-1:2008; ISO 21527-2:2008);
10. Molds (ISO 21527-1:2008; ISO 21527-2:2008);
11. *Pseudomonas spp* (ISO 13720:2010);
12. Coagulase-positive staphylococci (ISO 6888-2:1999/AMD 1:2003);
13. Detection and count of *Campylobacter spp.* (ISO 10272-1:2017; ISO 10272-2:2017);
14. Detection and count of *Listeria monocytogenes* (ISO 11290-1:2017; ISO 11290-2:2017);
15. Detection and count of *Salmonella spp.* (ISO 6579-1:2017/Amd 1:2020; ISO/TS 6579-2:2012);
16. Humidity (AOAC 2007.04);
17. Chlorides (NaCl) NMKL No. 178, 2004);
18. Number of peroxides (ISO 3960:2007);
19. Anisidine index (ISO 6885:2006);
20. Totox (ISO 6885:2006);
21. Rancidity test (Kreiss) (NGD C 56-1979);
22. Proteolysis index (on total nitrogen) (MPI-069-R00.10).

Activity of water (AW) refers to the ratio of vapor pressure of water in a given material to the vapor pressure of pure water. It is an index indicating the amount of water that, in a given product, is free from particular bonds with other components, and hence the amount of water (expressed in a dimensionless value between 0 and 1) available for chemical and biological reactions.

The peroxide value/number (PV) measures the peroxide/hydroperoxide value mainly obtained from primary oxidation processes. The lower the PV, the better the quality of the food/food preparation.

The anisidine value/index (AV) indicates the secondary state of oxidation that occurs when hydroperoxides decompose to form carbonyls and other compounds, in particular aldehydes. It is thus defined because the organic compound anisidine is used as a reagent.

The Totox value is calculated using the formula: "AV (Anisidine value/index) + 2PV (peroxide value/number)" to indicate the general oxidation state. The lower the Totox value, the better the quality of the food/food preparation.

The Kreiss assay is a chemical assay used to qualitatively determine the rancidity degree of a food/food preparation. The test is used to detect the secondary products of self-oxidation of fatty acids and is accompanied by the determination of the peroxide value (peroxides being the primary products of self-oxidation). Fluoroglucin is used as a reagent.

### EXPERIMENTAL RESULTS

The following are summary tables of the experimental values found by carrying out each laboratory test according to the ISO methods and standards as described in the previous section "Sampling and analysis".

"STD" refers, for each test that was carried out, the experimental value found according to the standard, i.e. the chicken burger prepared with known methods.

"COMP" refers, for each test that was carried out, the experimental value found according to the reference, i.e. the chicken burger added with the preservative composition of the invention.

It should be noted that for the tests about the bacteriostatic power of the preservative composition, the results obtained from each test are summarized in Figure 1.

### 1. Activity of water (Aw)

**[Table 1]**

| **Recipe** | **Start of tests** | **Activity of water (Aw)** | **Log10** | **Mean** | **Median** |
|---|---|---|---|---|---|
| STD | 13.08.20 | 0.982 | -0.00789 | 0.979 | 0.978 |
| STD | 15.08.20 | 0.978 | -0.00966 | | |
| STD | 17.08.20 | 0.979 | -0.00922 | | |
| STD | 19.08.20 | 0.979 | -0.00922 | | |
| STD | 21.08.20 | 0.978 | -0.00966 | | |
| STD | 23.08.20 | 0.978 | -0.00966 | | |
| STD | 25.08.20 | 0.976 | -0.01055 | | |
| COMP | 13.08.20 | 0.986 | -0.00612 | 0.986 | 0.987 |
| COMP | 15.08.20 | 0.989 | -0.00480 | | |
| COMP | 17.08.20 | 0.984 | -0.00700 | | |
| COMP | 19.08.20 | 0.987 | -0.00568 | | |
| COMP | 21.08.20 | 0.987 | -0.00568 | | |
| COMP | 23.08.20 | 0.988 | -0.00524 | | |
| COMP | 25.08.20 | 0.984 | -0.00700 | | |

### 2. pH

**Table 2**

| **Recipe** | **Start of tests** | **pH** | **Log10** | **Mean** | **Median** |
|---|---|---|---|---|---|
| STD | 13.08.20 | 5.67 | 0.75358 | 5.353 | 5.31 |
| STD | 15.08.20 | 5.49 | 0.73957 | | |
| STD | 17.08.20 | 5.31 | 0.72509 | | |
| STD | 19.08.20 | 5.23 | 0.71850 | | |
| STD | 21.08.20 | 5.27 | 0.72181 | | |
| STD | 23.08.20 | 5.33 | 0.72673 | | |
| STD | 25.08.20 | 5.17 | 0.71349 | | |
| COMP | 13.08.20 | 5.68 | 0.75435 | 5.541 | 5.54 |
| COMP | 15.08.20 | 5.63 | 0.75051 | | |
| COMP | 17.08.20 | 5.56 | 0.74507 | | |
| COMP | 19.08.20 | 5.54 | 0.74351 | | |
| COMP | 21.08.20 | 5.52 | 0.74194 | | |
| COMP | 23.08.20 | 5.54 | 0.74351 | | |
| COMP | 25.08.20 | 5.32 | 0.72591 | | |

### 3. CIELab (a)

**Table 3**

| **Recipe** | **Start of tests** | **CIELab (a)** | **Log10** | **Mean** | **Median** |
|---|---|---|---|---|---|
| STD | 13.08.20 | 11.53 | 1.06183 | 10.043 | 10.5 |
| STD | 15.08.20 | 11.38 | 1.05614 | | |
| STD | 17.08.20 | 10.88 | 1.03663 | | |
| STD | 19.08.20 | 10.5 | 1.02119 | | |
| STD | 21.08.20 | 9.39 | 0.97267 | | |
| STD | 23.08.20 | 8.46 | 0.92737 | | |
| STD | 25.08.20 | 8.16 | 0.91169 | | |
| COMP | 13.08.20 | 10.13 | 1.00561 | 9.203 | 8.92 |
| COMP | 15.08.20 | 8.65 | 0.93702 | | |
| COMP | 17.08.20 | 8.85 | 0.94694 | | |
| COMP | 19.08.20 | 9.67 | 0.98543 | | |
| COMP | 21.08.20 | 9.42 | 0.97405 | | |
| COMP | 23.08.20 | 8.78 | 0.94349 | | |
| COMP | 25.08.20 | 8.92 | 0.95036 | | |

### 4. Lactic bacteria

**Table 4**

| **Recipe** | **Start of tests** | **Lactic bacteria (CFU/g)** | **Log10** | **Mean** | **Median** |
|---|---|---|---|---|---|
| STD | 13.08.20 | 420,000 | 5.62325 | 77,731,429 | 63,000,000 |
| STD | 15.08.20 | 5,600,000 | 6.74819 | | |
| STD | 17.08.20 | 5,100,000 | 6.70757 | | |
| STD | 19.08.20 | 260,000,000 | 8.41497 | | |
| STD | 21.08.20 | 110,000,000 | 8.04139 | | |
| STD | 23.08.20 | 63,000,000 | 7.79934 | | |
| STD | 25.08.20 | 100,000,000 | 8.00000 | | |
| COMP | 13.08.20 | 190,000 | 5.27875 | 17,198,571 | 3,700,000 |
| COMP | 15.08.20 | 250,000 | 5.39794 | | |
| COMP | 17.08.20 | 250,000 | 5.39794 | | |
| COMP | 19.08.20 | 3,700,000 | 6.56820 | | |
| COMP | 21.08.20 | 12,000,000 | 7.07918 | | |
| COMP | 23.08.20 | 63,000,000 | 7.79934 | | |
| COMP | 25.08.20 | 41,000,000 | 7.61278 | | |

### 5. Aerobic mesophilic microorganisms at 30°C

**Table 5**

| **Recipe** | **Start of tests** | **Aerobic mesophilic microorganisms at 30°C (CFU/g)** | **Log10** | **Mean** | **Median** |
|---|---|---|---|---|---|
| STD | 13.08.20 | 1,100,000 | 6.04139 | 156,871,429 | 120,000,000 |
| STD | 15.08.20 | 16,000,000 | 7.20412 | | |
| STD | 17.08.20 | 21,000,000 | 7.32222 | | |
| STD | 19.08.20 | 290,000,000 | 8.46240 | | |
| STD | 21.08.20 | 120,000,000 | 8.07918 | | |
| STD | 23.08.20 | 510,000,000 | 8.70757 | | |
| STD | 25.08.20 | 140,000,000 | 8.14613 | | |
| COMP | 13.08.20 | 300,000 | 5.47712 | 34,128,571 | 22,000,000 |
| COMP | 15.08.20 | 4,500,000 | 6.65321 | | |
| COMP | 17.08.20 | 6,100,000 | 6.78533 | | |
| COMP | 19.08.20 | 22,000,000 | 7.34242 | | |
| COMP | 21.08.20 | 28,000,000 | 7.44716 | | |
| COMP | 23.08.20 | 98,000,000 | 7.99123 | | |
| COMP | 25.08.20 | 80,000,000 | 7.90309 | | |

### 6. Psychotrophic microorganisms

**Table 6**

| **Recipe** | **Start of tests** | **Psychotrophic microorganisms (CFU/g)** | **Log10** | **Mean** | **Median** |
|---|---|---|---|---|---|
| STD | 13.08.20 | 78,000 | 4.89209 | 3,232,571 | 1,900,000 |
| STD | 15.08.20 | 450,000 | 5.65321 | | |
| STD | 17.08.20 | 1,900,000 | 6.27875 | | |
| STD | 19.08.20 | 400,000 | 5.60206 | | |
| STD | 21.08.20 | 4,800,000 | 6.68124 | | |
| STD | 23.08.20 | 6,900,000 | 6.83885 | | |
| STD | 25.08.20 | 8,100,000 | 6.90849 | | |
| COMP | 13.08.20 | 36,000 | 4.55630 | 2,653,714 | 1,700,000 |
| COMP | 15.08.20 | 250,000 | 5.39794 | | |
| COMP | 17.08.20 | 1,700,000 | 6.23045 | | |
| COMP | 19.08.20 | 290,000 | 5.46240 | | |
| COMP | 21.08.20 | 3,800,000 | 6.57978 | | |
| COMP | 23.08.20 | 5,500,000 | 6.74036 | | |
| COMP | 25.08.20 | 7,000,000 | 6.84510 | | |

### 7. Enterobacteriaceae

**Table 7**

| **Recipe** | **Start of tests** | **Enterobacteria ceae (CFU/g)** | **Log10** | **Mean** | **Median** |
|---|---|---|---|---|---|
| STD | 13.08.20 | 12,000 | 4.07918 | 117,429 | 150,000 |
| STD | 15.08.20 | 150,000 | 5.17609 | | |
| STD | 17.08.20 | 170,000 | 5.23045 | | |
| STD | 19.08.20 | 210,000 | 5.32222 | | |
| STD | 21.08.20 | 160,000 | 5.20412 | | |
| STD | 23.08.20 | 70,000 | 4.84510 | | |
| STD | 25.08.20 | 50,000 | 4.69897 | | |
| COMP | 13.08.20 | 5,600 | 3.74819 | 13,214 | 12,000 |
| COMP | 15.08.20 | 16,000 | 4.20412 | | |
| COMP | 17.08.20 | 10,500 | 4.02119 | | |
| COMP | 19.08.20 | 12,000 | 4.07918 | | |
| COMP | 21.08.20 | 27,000 | 4.43136 | | |
| COMP | 23.08.20 | 13,000 | 4.11394 | | |
| COMP | 25.08.20 | 8,400 | 3.92428 | | |

### 8. β-glucuronidase positive Escherichia coli

**Table 8**

| **Recipe** | **Start of tests** | **β-glucuronidase-positive Escherichia coli (CFU/g)** | **Log10** | **Mean** | **Median** |
|---|---|---|---|---|---|
| STD | 13.08.20 | 3,000 | 3.47712 | 7,729 | 8,400 |
| STD | 15.08.20 | 12,000 | 4.07918 | | |
| STD | 17.08.20 | 8,400 | 3.92428 | | |
| STD | 19.08.20 | 9,100 | 3.95904 | | |
| STD | 21.08.20 | 11,000 | 4.04139 | | |
| STD | 23.08.20 | 7,000 | 3.84510 | | |
| STD | 25.08.20 | 3,600 | 3.55630 | | |
| COMP | 13.08.20 | 2,000 | 3.30103 | 2,771 | 2,600 |
| COMP | 15.08.20 | 4,100 | 3.61278 | | |
| COMP | 17.08.20 | 2,700 | 3.43136 | | |
| COMP | 19.08.20 | 4,600 | 3.66276 | | |
| COMP | 21.08.20 | 2,600 | 3.41497 | | |
| COMP | 23.08.20 | 2,400 | 3.38021 | | |
| COMP | 25.08.20 | 1,000 | 3.00000 | | |

### 9. Yeasts

**Table 9**

| **Recipe** | **Start of tests** | **Yeasts (CFU/g)** | **Log10** | **Mean** | **Median** |
|---|---|---|---|---|---|
| STD | 13.08.20 | 8,000 | 3.90309 | 151,714 | 130,000 |
| STD | 15.08.20 | 130,000 | 5.11394 | | |
| STD | 17.08.20 | 130,000 | 5.11394 | | |
| STD | 19.08.20 | 64,000 | 4.80618 | | |
| STD | 21.08.20 | 250,000 | 5.39794 | | |
| STD | 23.08.20 | 400,000 | 5.60206 | | |
| STD | 25.08.20 | 80,000 | 4.90309 | | |
| COMP | 13.08.20 | 20,000 | 4.30103 | 75,286 | 46,000 |
| COMP | 15.08.20 | 20,000 | 4.30103 | | |
| COMP | 17.08.20 | 1,000 | 3.00000 | | |
| COMP | 19.08.20 | 46,000 | 4.66276 | | |
| COMP | 21.08.20 | 150,000 | 5.17609 | | |
| COMP | 23.08.20 | 120,000 | 5.07918 | | |
| COMP | 25.08.20 | 170,000 | 5.23045 | | |

### 10. Molds

**Table 10**

| **Recipe** | **Start of tests** | **Molds (CFU/g)** | **Log10** | **Mean** | **Median** |
|---|---|---|---|---|---|
| STD | 13.08.20 | 300 | 2.47712 | 23,329 | 5,800 |
| STD | 15.08.20 | 6,000 | 3.77815 | | |
| STD | 17.08.20 | 1,000 | 3.00000 | | |
| STD | 19.08.20 | 15,000 | 4.17609 | | |
| STD | 21.08.20 | 5,200 | 3.71600 | | |
| STD | 23.08.20 | 130,000 | 5.11394 | | |
| STD | 25.08.20 | 5,800 | 3.76343 | | |
| COMP | 13.08.20 | 450 | 2.65321 | 2,864 | 1,500 |
| COMP | 15.08.20 | 2,700 | 3.43136 | | |
| COMP | 17.08.20 | 400 | 2.60206 | | |
| COMP | 19.08.20 | 10,000 | 4.00000 | | |
| COMP | 21.08.20 | 4,000 | 3.60206 | | |
| COMP | 23.08.20 | 1,000 | 3.00000 | | |
| COMP | 25.08.20 | 1,500 | 3.17609 | | |

### 11. Pseudomonas spp

**Table 11**

| **Recipe** | **Start of tests** | **Pseudomonas spp (CFU/g)** | **Log10** | **Mean** | **Median** |
|---|---|---|---|---|---|
| STD | 13.08.20 | 30,000 | 4.47712 | 125,714 | 130,000 |
| STD | 15.08.20 | 260,000 | 5.41497 | | |
| STD | 17.08.20 | 130,000 | 5.11394 | | |
| STD | 19.08.20 | 55,000 | 4.74036 | | |
| STD | 21.08.20 | 160,000 | 5.20412 | | |
| STD | 23.08.20 | 200,000 | 5.30103 | | |
| STD | 25.08.20 | 45,000 | 4.65321 | | |
| COMP | 13.08.20 | 4,100 | 3.61278 | 89,157 | 70,000 |
| COMP | 15.08.20 | 150,000 | 5.17609 | | |
| COMP | 17.08.20 | 70,000 | 4.84510 | | |
| COMP | 19.08.20 | 150,000 | 5.17609 | | |
| COMP | 21.08.20 | 55,000 | 4.74036 | | |
| COMP | 23.08.20 | 55,000 | 4.74036 | | |
| COMP | 25.08.20 | 140,000 | 5.14613 | | |

### 12. Coagulase-positive staphylococci

**Table 12**

| **Recipe** | **Start of tests** | **Coagulase-positive staphylococci (CFU/g)** | **Log10** | **Mean** | **Median** |
|---|---|---|---|---|---|
| STD | 13.08.20 | 240 | 2.38021 | 220 | 220 |
| STD | 15.08.20 | 200 | 2.30103 | | |
| STD | 17.08.20 | <10 | 0.00000 | | |
| STD | 19.08.20 | <10 | 0.00000 | | |
| STD | 21.08.20 | <10 | 0.00000 | | |
| STD | 23.08.20 | <10 | 0.00000 | | |
| STD | 25.08.20 | <10 | 0.00000 | | |
| COMP | 13.08.20 | 450 | 2.65321 | 2,864 | 1,500 |
| COMP | 15.08.20 | 2,700 | 3.43136 | | |
| COMP | 17.08.20 | 400 | 2.60206 | | |
| COMP | 19.08.20 | 10,000 | 4.00000 | | |
| COMP | 21.08.20 | 4,000 | 3.60206 | | |
| COMP | 23.08.20 | 1,000 | 3.00000 | | |
| COMP | 25.08.20 | 1,500 | 3.17609 | | |

### 13. Campylobacter spp.

**Table 13**

| **Recipe** | **Start of tests** | **Campylobate**r **spp (CFU/g)** | **Log10** | **Mean** | **Median** |
|---|---|---|---|---|---|
| STD | 13.08.20 | 10 | 1.00000 | 90 | 75 |
| STD | 15.08.20 | <10 | 0.00000 | | |
| STD | 17.08.20 | <10 | 0.00000 | | |
| STD | 19.08.20 | 200 | 2.30103 | | |
| STD | 21.08.20 | 100 | 2.00000 | | |
| STD | 23.08.20 | 50 | 1.69897 | | |
| STD | 25.08.20 | <10 | 0.00000 | | |
| COMP | 13.08.20 | <10 | 0.00000 | 10 | 10 |
| COMP | 15.08.20 | <10 | 0.00000 | | |
| COMP | 17.08.20 | <10 | 0.00000 | | |
| COMP | 19.08.20 | <10 | 0.00000 | | |
| COMP | 21.08.20 | 10 | 1.00000 | | |
| COMP | 23.08.20 | 10 | 1.00000 | | |
| COMP | 25.08.20 | 10 | 1.00000 | | |

### 14. Listeria monocytogenes

**Table 14**

| **Recipe** | **Start of tests** | **Listeria Monocytogenes (CFU/g)** | **Log10** | **Mean** | **Median** |
|---|---|---|---|---|---|
| STD | 13.08.20 | 40 | 1.60206 | 31 | 40 |
| STD | 15.08.20 | 40 | 1.60206 | | |
| STD | 17.08.20 | 40 | 1.60206 | | |
| STD | 19.08.20 | 10 | 1.00000 | | |
| STD | 21.08.20, | 40 | 1.60206 | | |
| STD | 23.08.20 | 40 | 1.60206 | | |
| STD | 25.08.20 | 10 | 1.00000 | | |
| COMP | 13.08.20 | 40 | 1.60206 | 31 | 40 |
| COMP | 15.08.20 | 40 | 1.60206 | | |
| COMP | 17.08.20 | 40 | 1.60206 | | |
| COMP | 19.08.20 | 40 | 1.60206 | | |
| COMP | 21.08.20 | 10 | 1.00000 | | |
| COMP | 23.08.20 | 40 | 1.60206 | | |
| COMP | 25.08.20 | 10 | 1.00000 | | |

### 15. Salmonella spp

**Table 15**

| **Recipe** | **Start of tests** | **Salmonella spp (MPN/g)** | **Log10** | **Mean** | **Median** |
|---|---|---|---|---|---|
| STD | 13.08.20 | 0 | n.a. | 0 | 0 |
| STD | 15.08.20 | 0 | n.a. | | |
| STD | 17.08.20 | 0 | n.a. | | |
| STD | 19.08.20 | 0 | n.a. | | |
| STD | 21.08.20 | 0 | n.a. | | |
| STD | 23.08.20 | 0 | n.a. | | |
| STD | 25.08.20 | 0 | n.a. | | |
| COMP | 13.08.20 | 0 | n.a. | 0 | 0 |
| COMP | 15.08.20 | 0 | n.a. | | |
| COMP | 17.08.20 | 0 | n.a. | | |
| COMP | 19.08.20 | 0 | n.a. | | |
| COMP | 21.08.20 | 0 | n.a. | | |
| COMP | 23.08.20 | 0 | n.a. | | |
| COMP | 25.08.20 | 0 | n.a. | | |

### 16. Humidity

**Table 16**

| **Recipe** | **Start of tests** | **Humidity g/100g** | **Log10** | **Mean** | **Median** |
|---|---|---|---|---|---|
| STD | 13.08.20 | 69.26 | 1.84048 | 69.60 | 69.64 |
| STD | 15.08.20 | 69.21 | 1.84017 | | |
| STD | 17.08.20 | 69.64 | 1.84286 | | |
| STD | 19.08.20 | 69.45 | 1.84167 | | |
| STD | 21.08.20 | 69.96 | 1.84485 | | |
| STD | 23.08.20 | 69.75 | 1.84354 | | |
| STD | 25.08.20 | 69.92 | 1.84460 | | |
| COMP | 13.08.20 | 70.44 | 1.84782 | 70.68 | 70.61 |
| COMP | 15.08.20 | 70.61 | 1.84887 | | |
| COMP | 17.08.20 | 70.56 | 1.84856 | | |
| COMP | 19.08.20 | 70.85 | 1.85034 | | |
| COMP | 21.08.20 | 70.92 | 1.85077 | | |
| COMP | 23.08.20 | 70.79 | 1.84997 | | |
| COMP | 25.08.20 | 70.56 | 1.84856 | | |

### 17. Chlorides

**Table 17**

| **Recipe** | **Start of tests** | **Chlorides g/100g** | **Log10** | **Mean** | **Median** |
|---|---|---|---|---|---|
| STD | 13.08.20 | 1.31 | 0.11727 | 1.33 | 1.31 |
| STD | 15.08.20 | 1.40 | 0.14613 | | |
| STD | 17.08.20 | 1.28 | 0.10721 | | |
| STD | 19.08.20 | 1.29 | 0.11059 | | |
| STD | 21.08.20 | 1.23 | 0.08991 | | |
| STD | 23.08.20 | 1.46 | 0.16435 | | |
| STD | 25.08.20 | 1.37 | 0.13672 | | |
| COMP | 13.08.20 | 1.18 | 0.07188 | 1.30 | 1.26 |
| COMP | 15.08.20 | 1.26 | 0.10037 | | |
| COMP | 17.08.20 | 1.28 | 0.10721 | | |
| COMP | 19.08.20 | 1.25 | 0.09691 | | |
| COMP | 21.08.20 | 1.30 | 0.11394 | | |
| COMP | 23.08.20 | 1.61 | 0.20683 | | |
| COMP | 25.08.20 | 1.25 | 0.09691 | | |

### 18. Number of peroxides

**Table 18**

| **Recipe** | **Start of tests** | **Peroxide value meq O2/kg lipid fraction** | **Log10** | **Mean** | **Median** |
|---|---|---|---|---|---|
| STD | 13.08.20 | 0.25 | -0.60206 | 0.45 | 0.48 |
| STD | 15.08.20 | 0.32 | -0.49485 | | |
| STD | 17.08.20 | 0.37 | -0.43180 | | |
| STD | 19.08.20 | 0.50 | -0.30103 | | |
| STD | 21.08.20 | 0.48 | -0.31876 | | |
| STD | 23.08.20 | 0.60 | -0.22185 | | |
| STD | 25.08.20 | 0.64 | -0.19382 | | |
| COMP | 13.08.20 | 0.28 | -0.55284 | 0.39 | 0.42 |
| COMP | 15.08.20 | 0.33 | -0.48149 | | |
| COMP | 17.08.20 | 0.32 | -0.49485 | | |
| COMP | 19.08.20 | 0.45 | -0.34679 | | |
| COMP | 21.08.20 | 0.42 | -0.37675 | | |
| COMP | 23.08.20 | 0.45 | -0.34679 | | |
| COMP | 25.08.20 | 0.50 | -0.30103 | | |

### 19. Anisidine index

**Table 19**

| **Recipe** | **Start of tests** | **Anisidine index on lipid fraction** | **Log10** | **Mean** | **Median** |
|---|---|---|---|---|---|
| STD | 13.08.20 | 1.20 | 0.07918 | 1.69 | 1.50 |
| STD | 15.08.20 | 1.10 | 0.04139 | | |
| STD | 17.08.20 | 1.30 | 0.11394 | | |
| STD | 19.08.20 | 1.50 | 0.17609 | | |
| STD | 21.08.20 | 1.80 | 0.25527 | | |
| STD | 23.08.20 | 2.50 | 0.39794 | | |
| STD | 25.08.20 | 2.40 | 0.38021 | | |
| COMP | 13.08.20 | 1.30 | 0.11394 | 1.56 | 1.40 |
| COMP | 15.08.20 | 1.30 | 0.11394 | | |
| COMP | 17.08.20 | 1.30 | 0.11394 | | |
| COMP | 19.08.20 | 1.40 | 0.14613 | | |
| COMP | 21.08.20 | 1.60 | 0.20412 | | |
| COMP | 23.08.20 | 1.90 | 0.27875 | | |
| COMP | 25.08.20 | 2.10 | 0.32222 | | |

### 20. Totox

**Table 20**

| **Recipe** | **Start of tests** | **Totox** | **Log10** | **Mean** | **Median** |
|---|---|---|---|---|---|
| STD | 13.08.20 | 1.70 | 0.23045 | 2.59 | 2.50 |
| STD | 15.08.20 | 1.74 | 0.24055 | | |
| STD | 17.08.20 | 2.04 | 0.30963 | | |
| STD | 19.08.20 | 2.50 | 0.39794 | | |
| STD | 21.08.20 | 2.76 | 0.44091 | | |
| STD | 23.08.20 | 3.70 | 0.56820 | | |
| STD | 25.08.20 | 3.68 | 0.56585 | | |
| COMP | 13.08.20 | 1.86 | 0.26951 | 2.34 | 2.30 |
| COMP | 15.08.20 | 1.96 | 0.29226 | | |
| COMP | 17.08.20 | 1.94 | 0.28780 | | |
| COMP | 19.08.20 | 2.30 | 0.36173 | | |
| COMP | 21.08.20 | 2.44 | 0.38739 | | |
| COMP | 23.08.20 | 2.80 | 0.44716 | | |
| COMP | 25.08.20 | 3.10 | 0.49136 | | |

### 21. Kreiss assay

**Table 21**

| **Recipe** | **Start of tests** | **Kreiss assay (Negative: 0; positive: 1)** | **Log10** | **Mean** | **Median** |
|---|---|---|---|---|---|
| STD | 13.08.20 | Negative | n.a. | n.a. | n.a. |
| STD | 15.08.20 | Negative | n.a. | | |
| STD | 17.08.20 | Negative | n.a. | | |
| STD | 19.08.20 | Negative | n.a. | | |
| STD | 21.08.20 | Negative | n.a. | | |
| STD | 23.08.20 | Negative | n.a. | | |
| STD | 25.08.20 | Negative | n.a. | | |
| COMP | 13.08.20 | Negative | n.a. | n.a. | n.a. |
| COMP | 15.08.20 | Negative | n.a. | | |
| COMP | 17.08.20 | Negative | n.a. | | |
| COMP | 19.08.20 | Negative | n.a. | | |
| COMP | 21.08.20 | Negative | n.a. | | |
| COMP | 23.08.20 | Negative | n.a. | | |
| INGRIT | 25.08.20 | Negative | n.a. | | |

### 22. Proteolysis index

**Table 22**

| **Recipe** | **Start of tests** | **Proteolysis index** | **Log10** | **Mean** | **Median** |
|---|---|---|---|---|---|
| STD | 13.08.20 | 7.95 | 0.90037 | 8.55 | 8.42 |
| STD | 15.08.20 | 8.31 | 0.91960 | | |
| STD | 17.08.20 | 8.32 | 0.92012 | | |
| STD | 19.08.20 | 8.42 | 0.92531 | | |
| STD | 21.08.20 | 8.82 | 0.94547 | | |
| STD | 23.08.20 | 9.07 | 0.95761 | | |
| STD | 25.08.20 | 8.95 | 0.95182 | | |
| COMP | 13.08.20 | 7.51 | 0.87564 | 7.81 | 7.66 |
| COMP | 15.08.20 | 7.58 | 0.87967 | | |
| COMP | 17.08.20 | 7.66 | 0.88423 | | |
| COMP | 19.08.20 | 7.52 | 0.87622 | | |
| COMP | 21.08.20 | 8.04 | 0.90526 | | |
| COMP | 23.08.20 | 8.22 | 0.91487 | | |
| COMP | 25.08.20 | 8.13 | 0.91009 | | |

### CONCLUSIONS

The tests carried out in the context of this comparative study showed that the addition of the preservative composition "COMP" to the basic recipe for the product "Hamburger di pollo 100g di Avicola Alimentare Monteverde" ("STD"), led to significant improvements to the overall stability of the finished product (Figure 23). "Basic recipe" refers to about 80% chicken meat by weight based on the total weight of the food and starches for the remaining percentage with the role of binders. The difference between "COMP" and "STD" is the presence of the preservative composition of the invention.in "COMP".

Such improvements were found both from a microbiological point of view and from a chemical, physical and organoleptic point of view.

Also the color of the product, a physical/organoleptic parameter of considerable importance, directly related to the state of preservation (the color of the meat is affected by the content of pigments, the associated chemical state - oxidized or reduced - and the physical state of the muscular proteins), with particular reference to the Red Index "a", was shown to be significantly more stable throughout the commercial life cycle (Method 3 - CIELab colorimetry, Figure 3).

## Claims

1. A food preservative composition, comprising:
- a first association of extracts containing
∘ grape seed extract,
∘ green tea extract, and
∘ an extract selected from the group consisting of rosemary extract, sea-buckthorn extract, dog rose extract and combinations thereof,
the first association being in quantities comprised between 4.5% and 10% by weight based on the total weight of the composition,
- a second association of extracts comprising one or more water-soluble carbohydrates derived from cereals and/or tubers, the second association being in quantities comprised between 90% and 95.5% by weight based on the total weight of the composition.

2. A preservative composition according to claim 1, wherein the water-soluble carbohydrates are selected from the group consisting of maltodextrin, dextrose and combinations thereof.

3. A preservative composition according to claim 1 or 2, wherein the first association of extracts contains:
- grape seed extract in quantities comprised between 2.5% and 5% by weight,
- green tea extract in quantities comprised between 1.5% and 3% by weight, and
- an extract selected from the group consisting of rosemary extract, sea-buckthorn extract, dog rose extract and combinations thereof, whose total amount is comprised between 0.5% and 2% by weight based on the total weight of the preservative composition.

4. A preservative composition according to claim 1 or 2, wherein the second association of extracts comprises:
- maltodextrin in quantities comprised between 50% and 80% by weight, and
- dextrose in quantities comprised between 10% and 45.5% by weight based on the total weight of the preservative composition.

5. A preservative composition according to any one of claims from 1 to 4, wherein the extracts of the first and second association are in the form of dry extracts.

6. A method of preparing the preservative composition according to any one of claims from 1 to 5, comprising the steps of:
a) providing a precursor of the first association of extracts comprising
a primary grape seed extract
a primary green tea extract,
primary rosemary, sea-buckthorn, dog rose extracts or combinations thereof, and
a precursor of the second association of extracts, comprising
a primary extract of cereals and/or tubers comprising one or more water-soluble carbohydrates;
b) separately treating the primary extracts, the step of treating comprising:
b1) a heating sub-step at temperatures comprised between 15°C and 40°C and for a time period comprised between 19 and 37 minutes, followed by
b2) a cooling sub-step at temperatures comprised between 0.1°C and 3°C and for a time period comprised between 16 and 25 minutes
wherein the set of the heating sub-step b1) and the cooling sub-step b2) is cyclically repeated for a number of times ≥ 10 and ≤ 20
to obtain the first association of extracts and the second association of extracts of the preservative composition;
c) mixing the first and second association of extracts at a temperature comprised between 15°C and 25°C to obtain the preservative composition.

7. Use of the preservative composition according to any one of claims from 1 to 5, for preservation of fresh or cooked food or food preparations.

8. Use according to claim 7, wherein the preservative composition is dispersed in food or food preparations in amounts ranging from 0.3% to 0.5% by weight based on the total weight of the food or food preparation.

9. Use according to claim 7 or 8, for bacteriostasis of microorganisms selected from the group consisting of: mesophilic lactic bacteria, aerobic mesophilic microorganisms, psychotropic microorganisms, yeasts, molds, coagulase-positive staphylococci, *Enterobacteriaceae, Escherichia coli, Pseudomonas spp, Staphylococcus aureus, Campylobacter spp, Listeria monocytogenes,* and *Salmonella spp* and combinations thereof.

10. Food or food preparation comprising the preservative composition according to any one of claims from 1 to 5, **characterized by** a shelf life of more than 8 days.
